# EUROPEAN PATENT SPECIFICATION

(11) **EP 3 378 456 B1**
(45) Date of publication and mention of the grant of the patent: **01.07.2026**
(21) Application number: 18162822.3
(22) Date of filing: 20.03.2018
(51) Int. Cl.: A61G 3/06

(54) **SELF-LEVELING VEHICLE RAMP**
SELBSTNIVELLIERENDE FAHRZEUGRAMPE
RAMPE DE VÉHICULE À NIVELLEMENT AUTOMATIQUE

(30) Priority: 21.03.2017 SE 1750333
(43) Date of publication of application: 26.09.2018
(73) Proprietor: FEAL AB, 77468 Horndal (SE)
(72) Inventor: HANSSON, Johan, 78393 Stora Skedvi (SE)
(74) Representative: Groth & Co. KB

(56) References cited:
- DE-A1- 10 043 561
- DE-U1- 202010 011 687
- FR-A1- 2 866 908
- FR-A1- 2 908 092
- US-A- 4 488 833
- US-B2- 7 001 132

## Description

### Technical Field

The present invention relates to vehicle ramps intended to allow for transportation of, for instance, an electrically driven wheelchair or the like, between two different vertical levels which may be the floor in a transport vehicle and the ground. More specifically, the present invention relates to so-called end ramps.

### Background of the Invention

Vehicle ramps of the type to which the present invention relates are provided with a fixedly mounted part in a transport vehicle to which fixedly mounted part a pivotable ramp part is articulately connected. Examples of such ramps are known from US7001132B2, FR2908092A1, DE10043561A1, and/or DE202010011687U1. These types of ramps are constructed for a certain greatest vertical level difference between the floor of the transport vehicle and the ground. This means that the use of these ramps at a smaller level difference between the floor of the transport vehicle and ground than for what the ramp is constructed will generate a heightening of the travelling surface at the connection between the fixedly mounted part and the ramp part.

Such a heightening causes an unnecessary obstacle upon loading and unloading and creates in addition an uncomfortable bump in the plane of the vehicle ramp.

### The Object of the Invention

The object of the present invention is to provide a vehicle ramp which eliminates these disadvantages in conventional vehicle ramps by the vehicle ramp being self-leveling for removing said heightening of the travelling surface.

### Summary of the Invention

By the present invention, such as this is seen in the independent claim, the above-mentioned object is fulfilled, wherein said disadvantages have been removed. Suitable embodiments of the invention are defined in the dependent claims.

The invention concerns a self-leveling vehicle ramp which is provided with one or more ramp parts which in turned-out position extend between a vertical upper level and a vertical lower level. The vehicle ramp comprises a floor attachment having an upper joint to which a ramp part is connected. The floor attachment is mountable on a floor in a transport vehicle. The vehicle ramp is provided with a lower joint which connects the floor attachment with the ramp part. The lower joint is furthermore pivotable around the upper joint by the fact that the ramp part can be pivoted from a turned-out position to a retracted position. The lower joint may be formed as a robust hinge of piano type or as a flexible polymer. The provision of a vehicle ramp having an upper joint and a lower joint pivotable about the same allows making the ramp self-leveling by the lower joint connecting to the support without causing a jerk in the plane of the ramp.

In one embodiment of the invention, said lower joint is formed as an elastic spacer which in one end is directly or indirectly connected to the floor attachment and in the other end is connected to the ramp part. This design of the joint also allows a certain flexibility laterally of the ramp. The spacer is connected to the floor attachment via a fixing lug which may enclose a thickening in the end of the spacer. A corresponding fixing lug is connected to the ramp part for enclosing a thickening in the other end of the spacer.

In one embodiment of the invention, the elastic spacer is connected to a footplate which in turn is connected to said upper joint in the floor attachment and around which the footplate is pivotable. In this embodiment, the fixing lug is integrated with the footplate.

In one embodiment of the invention, the footplate is provided with a rotatable support yoke having a first set screw which can adjust the upper angle position of the ramp part in relation to the footplate.

In one embodiment of the invention, a second set screw is connected to the ramp part, which second set screw can adjust the smallest angle position of the ramp part in relation to the footplate.

In one embodiment of the invention, a first damping cylinder, preferably a gas cylinder, is in its one end connected to the floor attachment and in its other end connected to the ramp part for damping the movements of the ramp part in use and operation of the same.

In one embodiment of the invention, a second ramp part is permanently connected to the first ramp part and which second ramp part is formed to extend the vehicle ramp in an activated position either by the two ramp parts being foldable in relation to each other or being telescopically displaceable in relation to each other. A design with two or more ramp parts affords a lower slope at the same level difference alternatively to afford the same slope for a greater level difference by the fact that the ramp can be made longer.

In one embodiment of the invention, a second damping cylinder is in its one end connected to the first ramp part and is in its other end connected to the second ramp part for damping the movements in said folding operation. The second damping cylinder also contributes to the stability in the handling of the ramp.

In one embodiment of the invention, the end of the ramp part that connects to the vertical lower level is provided with a roller means. This roller means is of particular importance in a foldable vehicle ramp when this on one hand is to be folded out and on the other hand be folded in by the roller means facilitating this handling considerably by contact with the support.

The floor attachment is bolted in the floor of the car in which the ramp is to be used and constitutes also fastener for the upper joint of the ramp together with an attachment for a gas cylinder for the damping of the ramp movements.

The footplate with its fixing lug constitutes the uppermost part of the ramp and is mounted to an upper joint in the floor attachment.

The lower joint is preferably made of plastic and holds together the footplate with the fixing lug of the joint and the upper first ramp part.

A gas cylinder assists in addition in lifting the ramp as well as holding it in its folded-up position.

The upper and lower set screws are used to adjust the ramp in raised position so as to end up in correct position in the car.

The lower second ramp part is the part that is outermost on the ramp which rests against the lower level, usually the ground.

The travelling surface of the ramp consists of the lower ramp part, the upper ramp part, as well as a footplate having a fixing lug for the joint where it directly or indirectly is fixed in the floor attachments. The vehicle ramp is supported by the gas cylinders upon turning out as well as collapsing.

### Brief Description of the Drawings

Now, the invention will be described in more detail, references being made in connection with the accompanying drawing figures. The drawing figures show only explanatory sketches intended to facilitate the understanding of the invention.
- Figure 1: shows prior art of a part of a vehicle ramp in a side view.
- Figure 2: shows in a side view a corresponding part of a vehicle ramp according to the invention.
- Figure 3: shows in a side view a further part of a vehicle ramp according to the invention.
- Figure 4: shows in a side view a lowermost part of a vehicle ramp according to the invention.
- Figure 5: shows a side view of a turned-out vehicle ramp according to the invention.
- Figure 6: shows a top view of the turned-out vehicle ramp according to Figure 5.
- Figure 7: shows the corresponding view as in Figure 2 but where the ramp is halfway raised.
- Figure 8: shows the corresponding view as in Figure 2 but where the ramp is entirely raised.
- Figure 9: shows a second embodiment of the second joint.
- Figure 10: shows a third embodiment of the second joint.

### Description of the Invention

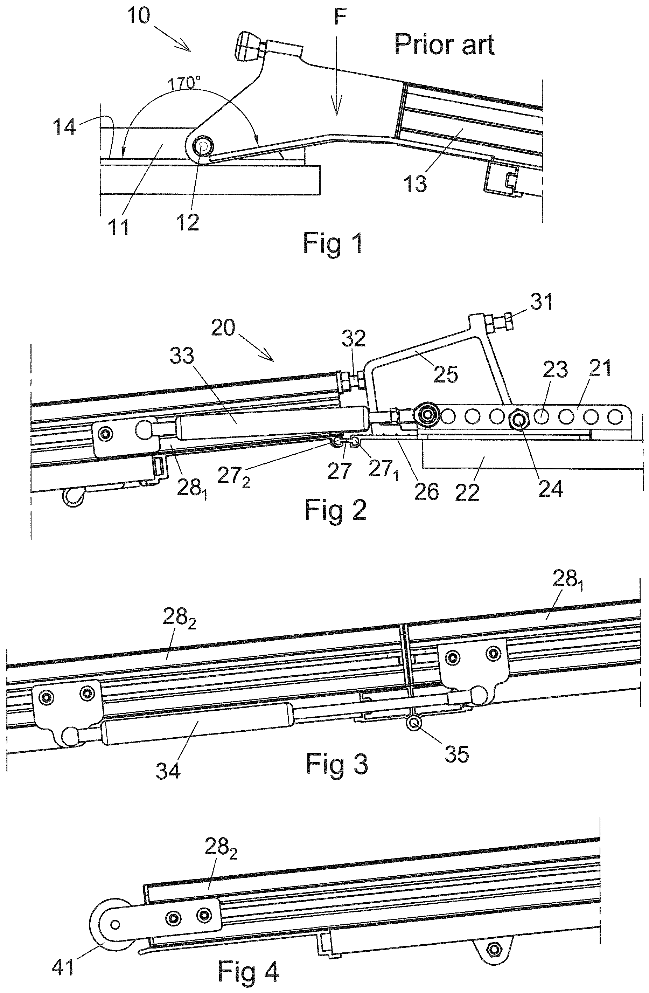

Figure 1 shows an upper joint of a vehicle ramp 10 according to prior art wherein a floor attachment 11 is provided with an upper joint 12 around which a ramp part 13 can be turned from an inactive position to an active position which is the position in the figure. As seen in the figure, the conventional ramp part is constructed with an angle for a certain determined slope, i.e., level difference. This means that in case of a lower level difference, the ramp part 13 will form a heightening F in the travelling surface 14. The upper end of the ramp part forms the angle 170° in relation to the travelling surface 14 while the optimal angle should have been 180°. From this 170° sloping part of the travelling surface, the slope then turns downward and is shown in the figure to about 190° in the downward part of the ramp part. This heightening of the travelling surface causes an unnecessary obstacle upon loading and unloading via the vehicle ramp and creates in addition an uncomfortable jump in the transportation.

Figure 2 shows a part of an embodiment according to the invention of a self-leveling vehicle ramp 20 which is shown from its other side in relation to the known vehicle ramp according to Figure 1. The vehicle ramp 20 is in its upper end provided with a floor attachment 21 mounted on a floor 22 in a transport vehicle. The floor attachment 21 is provided with a number of bearing attachments 23 for, in one of these, mounting the elevating bearing of the vehicle ramp as an upper joint 24 of the vehicle ramp. To the upper joint 24, a support yoke 25 is connected, which is provided with a footplate 26 wherein the footplate 26 and support yoke 25 as a unit can be rotated around the upper joint 24. A lower joint 27 is connected between the footplate 26 and a ramp part 28₁ in the vehicle ramp. This lower joint 27 is formed as an elastic spacer, which in one end 27₁ is indirectly connected to the floor attachment 21 via the footplate 26 and in the other end 27₂ is connected to the ramp part 28₁.

Furthermore, the support yoke 25 is provided with a first set screw 31, which can adjust the upper angle position, i.e., when the ramp is raised, of the ramp part in relation to the floor 22. Also a second set screw 32 is connected between the support yoke 25 and the ramp part 28₁, which second set screw 32 can adjust the smallest angle position of the ramp part 28₁ in relation to the footplate 26.

In addition, the vehicle ramp is provided with a first damping cylinder 33, in the form of a gas cylinder, which in its one end is connected to the floor attachment 21 and in its other end connected to the ramp part 28₁ for damping the movements of the ramp part in operation of the same.

Figure 3 shows parts of the first ramp part 28₁, which is connected to a second ramp part 28₂ via a folding hinge 35. Between the first and the second ramp part, a second damping cylinder 34, also this in the form of a gas cylinder, is mounted. Thus, these two ramp parts may be folded toward each other and together be raised toward the transport vehicle. Upon folded-out ramp parts, a considerably longer vehicle ramp is obtained than what can be handled in or on the transport vehicle without such a foldability.

Figure 4 shows the free lower end of the second ramp part 28₂, which end is provided with a roller means 41, which contributes to an easy manageability of the vehicle ramp when this is folded out.

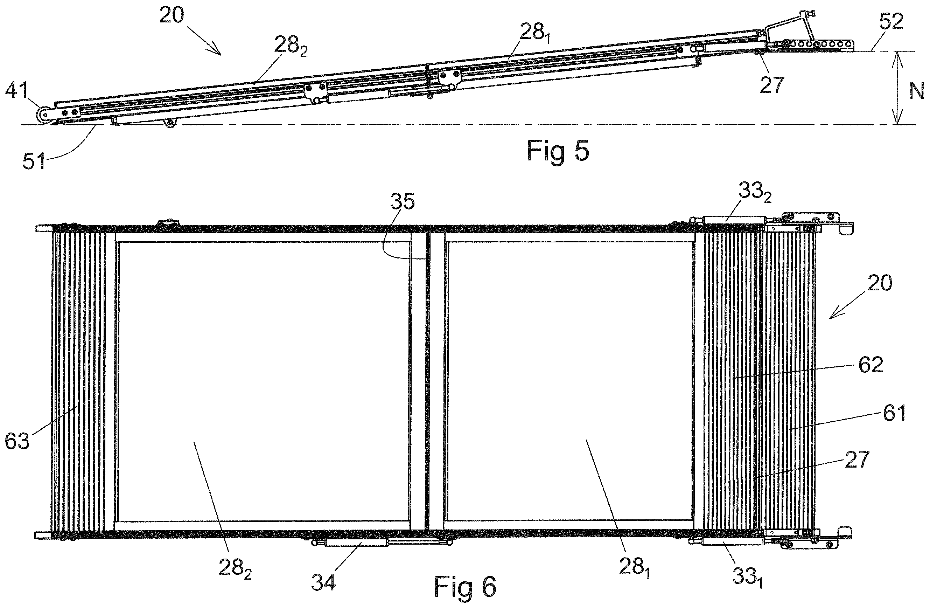

Figure 5 shows the entire vehicle ramp 20 from the side where the ramp parts 28₁, 28₂ are turned out and the roller means 41 of the second lower ramp part 28₂ connects to a vertical lower level 51 and where the first upper ramp part 28₁ connects to a vertical upper level 52 to bridge over the level difference N. Common level differences N for a vehicle ramp of the type shown are 50 < N < 100 cm. The upper joint 27 for the self-leveling is formed of a flexible material and is thereby movable both in the cross-direction of the ramp and in the bending direction thereof. The flexibility in the cross-direction increases at an increased distance between the two attachments of the joint 27.

Figure 6 shows the turned-out vehicle ramp 20 from above where the ramp parts 28₁, 28₂ are formed as overall area units suitable, for instance, for transports of electrically driven wheelchairs or the like. A floor connection 61 as well as an upper connecting part 62 of the ramp part 28₁ and a lower connecting part 63 of the ramp part connecting to the support/ground are knurled to increase the grip force against the ramp. Furthermore, the vehicle end of the ramp is provided with two damping cylinders 33₁, 33₂ while the folding hinge 35 is provided with only one damping cylinder 34.

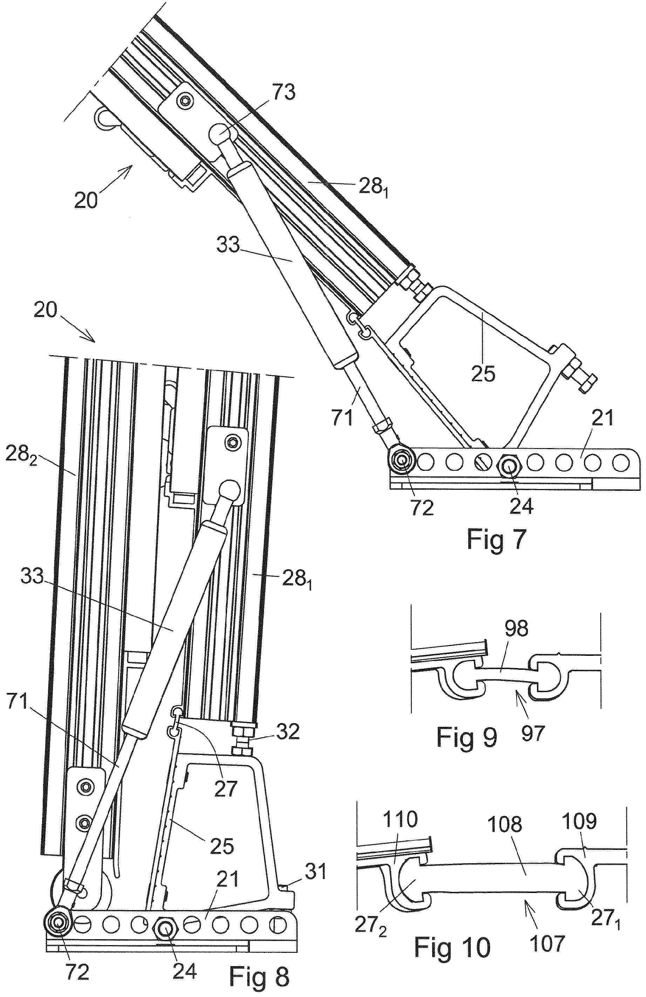

Figure 7 shows an upper part of the first ramp part 28₁ in a position when the vehicle ramp 20 is half raised. The ramp together with the support yoke 25 of the ramp have in this connection, from the position shown in Figure 2, been rotated around the upper joint 24 of the floor attachment 21 about 45°. The piston rod 71 of the first damping cylinder 33 has in this connection been expanded in relation to the position in Figure 2. The angle ratio between the support yoke 25 and the first ramp part 28₁ is unaltered and the damping cylinder 33 contributes by its mounting between the piston rod bearing 72 thereof in the floor attachment 21 and the cylinder bearing 73 thereof in the first ramp part 28₁ to the stability of the ramp in the handling from lowered position to lifted position and vice versa.

Figure 8 shows parts of the two ramp parts 28₁, 28₂ of the vehicle ramp 20 when these are entirely raised. The piston rod 71 of the damping cylinder 33 has been further extended by rotation around the piston rod bearing 72 by the additional rotation of the support yoke 25 and the first ramp part 28₁ around the upper joint 24 of the floor attachment 21. However, the damping cylinder 33 still contributes to the stability of the ramp in the operation thereof. In this entirely raised position, the set screws 31, 32 of the ramp are adjusted so that the upper angle position of the ramp in an entirely raised position exceeds 90° so as to in such a way obtain an autonomous stability in the movement of the transport vehicle.

In these folding and turning operations of the ramp, the lower elastic joint 27 is basically unactuated but as previously has been described, the joint 27 acts self-leveling upon entirely lowered ramp by allowing a flexibility between the ramp parts.

Figure 9 shows an alternative design of the lower elastic joint 97 the intermediate part 98 of which has been made longer for an increased elasticity.

Figure 10 shows a further alternative design of the lower elastic joint 107 the intermediate part 108 of which has on one hand been made even longer for an increased elasticity but has also been made thicker to increase the strength and the stiffness of the joint.

In the embodiments shown, one fastener of the joint is designated as a fixing lug/joint lug which is a part of the footplate and is located in its distal end, which is seen in the figures.

The course of events upon turning out is the following: When the ramp is turned out, footplate with joint lug will lie flat down against the floor of the vehicle in which the ramp is located, and after that the lower joint will fold as much as needed for the ramp to lie down against the ground. When thereafter the ramp is raised, the lower joint will fold until the movement stops against the lower set screw and the support frame and after that the upper joint is activated and the movement proceeds all the way until the upper set screw goes against its stop in the floor attachment.

Within the scope of the invention, the material of the lower elastic joint may in addition be selected so that stiffness and elasticity should be optimal for the intended use. The fasteners 109, 110 for the ends 27₁, 27₂ of the joint are adapted and formed so that the ends should be possible to laterally slide into the fasteners upon mounting. For the fixation of the joint in the fasteners, the fasteners may be mechanically closed by cover plates or be glued. Also set screws through the fasteners are feasible arrangements for fixing the joint in the fasteners.

## Claims

1. Self-leveling vehicle ramp (20) provided with one or more ramp parts (28₁, 28₂) and which in turned-out position extend between a vertical upper level (52) and a vertical lower level (51), which vehicle ramp (20) comprises a floor attachment (21) having an upper joint (24) to which a ramp part (28₁) is connected and mountable on a floor (22) in a transport vehicle, that a lower joint (27, 97, 107) connects the floor attachment (21) with the ramp part (28₁) and that the lower joint (27, 97, 107) is pivotable around the upper joint (24), **characterized in that** said lower joint (27, 97, 107) is formed as an elastic spacer, which in one end (27₁) is indirectly connected to the floor attachment (21) via a footplate (26) and in the other end (27₂) is connected to the ramp part (28₁) and that the footplate (26) which in turn is connected to said upper joint (24) in the floor attachment (21) and around which the footplate (26) is pivotable, wherein the footplate (26) is provided with a rotatable support yoke (25) having a first set screw (31), which can adjust an upper angle position of the ramp part (28₁) in relation to the footplate (26).

2. Vehicle ramp according to claim 1, **characterized in that** a second set screw (32) is connected to the ramp part (28₁), which second set screw can adjust a smallest angle position of the ramp part (28₁) in relation to the footplate (26).

3. Vehicle ramp according to any one of claims 1-2, **characterized in that** a first damping cylinder (33), preferably a gas cylinder, is in its one end connected to the floor attachment (21) and in its other end connected to the ramp part (28₁) for damping the movements of the ramp part in operation of the same.

4. Vehicle ramp according to any one of claims 1-3, **characterized in that** a second ramp part (28₂) is permanently connected to the first ramp part (28₁) and which second ramp part (28₂) is formed to extend the vehicle ramp in an activated position either by the two ramp parts being foldable in relation to each other or being telescopically displaceable in relation to each other.

5. Vehicle ramp according to claim 4, **characterized in that** a second damping cylinder (34) in its one end is connected to the first ramp part (28₁) and in its other end is connected to the second ramp part (28₂) for damping the movements in said folding operation.

6. Vehicle ramp according to any one of claims 1-5, **characterized in that** the end of the ramp part (28₂) that connects to the vertically lower level is provided with a roller means (41).

7. Vehicle ramp according to any of the preceding claims, wherein the spacer is connected to the floor attachment via a fixing lug which encloses a thickening at an end of the spacer, and wherein a corresponding fixing lug is connected to the ramp part for enclosing a thickening at the other end of the spacer.

8. Vehicle ramp according to claim 7, wherein the fixing lug is integrated with the footplate.

9. Vehicle ramp according to claim 7 or 8 as dependent on claim 5, wherein the lower joint is made of plastic and holds together the footplate and the first ramp part.

## Patentansprüche

1. Selbstnivellierende Fahrzeugrampe (20), die mit einem oder mehreren Rampenteilen (28₁, 28₂) versehen ist und die sich in herausgeklappter Position zwischen einem vertikalen oberen Niveau (52) und einem vertikalen unteren Niveau (51) erstrecken, welche Fahrzeugrampe (20) eine Bodenbefestigung (21) umfasst, die ein oberes Gelenk (24) aufweist, mit dem ein Rampenteil (28₁) verbunden ist und an einem Boden (22) in einem Transportfahrzeug montierbar ist, dass ein unteres Gelenk (27, 97, 107) die Bodenbefestigung (21) mit dem Rampenteil (28₁) verbindet und dass das untere Gelenk (27, 97, 107) um das obere Gelenk (24) schwenkbar ist, **dadurch gekennzeichnet, dass** das untere Gelenk (27, 97, 107) als ein elastischer Abstandshalter ausgebildet ist, der in einem Ende (27₁) indirekt mit der Bodenbefestigung (21) über eine Fußplatte (26) verbunden ist und in dem anderen Ende (27₂) mit dem Rampenteil (28₁) verbunden ist und dass die Fußplatte (26), die wiederum mit dem oberen Gelenk (24) in der Bodenbefestigung (21) verbunden ist und um die die Fußplatte (26) schwenkbar ist, wobei die Fußplatte (26) mit einem drehbaren Stützbügel (25) versehen ist, der eine erste Stellschraube (31) aufweist, die eine obere Winkelposition des Rampenteils (28₁) in Bezug auf die Fußplatte (26) einstellen kann.

2. Fahrzeugrampe nach Anspruch 1, **dadurch gekennzeichnet, dass** eine zweite Stellschraube (32) mit dem Rampenteil (28₁) verbunden ist, welche zweite Stellschraube eine kleinste Winkelposition des Rampenteils (28₁) in Bezug auf die Fußplatte (26) einstellen kann.

3. Fahrzeugrampe nach einem der Ansprüche 1-2, **dadurch gekennzeichnet, dass** ein erster Dämpfungszylinder (33), vorzugsweise ein Gaszylinder, in seinem einen Ende mit der Bodenbefestigung (21) verbunden ist und in seinem anderen Ende mit dem Rampenteil (28₁) verbunden ist für Dämpfen der Bewegungen des Rampenteils im Betrieb desselben.

4. Fahrzeugrampe nach einem der Ansprüche 1-3, **dadurch gekennzeichnet, dass** ein zweites Rampenteil (28₂) permanent mit dem ersten Rampenteil (28₁) verbunden ist und welches zweite Rampenteil (28₂) ausgebildet ist, die Fahrzeugrampe in einer aktivierten Position zu verlängern, entweder dadurch, dass die zwei Rampenteile in Bezug aufeinander faltbar sind oder in Bezug aufeinander teleskopisch verschiebbar sind.

5. Fahrzeugrampe nach Anspruch 4, **dadurch gekennzeichnet, dass** ein zweiter Dämpfungszylinder (34) in seinem einen Ende mit dem ersten Rampenteil (28₁) verbunden ist und in seinem anderen Ende mit dem zweiten Rampenteil (28₂) verbunden ist für Dämpfen der Bewegungen in dem Faltvorgang.

6. Fahrzeugrampe nach einem der Ansprüche 1-5, **dadurch gekennzeichnet, dass** das Ende des Rampenteils (28₂), das mit dem vertikal unteren Niveau verbindet, mit einem Rollenmittel (41) versehen ist.

7. Fahrzeugrampe nach einem der vorhergehenden Ansprüche, wobei der Abstandshalter mit der Bodenbefestigung über eine Befestigungsöse verbunden ist, die eine Verdickung an einem Ende des Abstandshalters umschließt und wobei eine entsprechende Befestigungsöse mit dem Rampenteil verbunden ist für Umschließen einer Verdickung an dem anderen Ende des Abstandshalters.

8. Fahrzeugrampe nach Anspruch 7, wobei die Befestigungsöse mit der Fußplatte integriert ist.

9. Fahrzeugrampe nach Anspruch 7 oder 8 in Abhängigkeit von Anspruch 5, wobei das untere Gelenk aus Kunststoff hergestellt ist und die Fußplatte und das erste Rampenteil zusammenhält.

## Revendications

1. Rampe de véhicule à nivellement automatique (20) pourvue d'une ou plusieurs parties de rampe (28₁, 28₂) qui, en position déployée, s'étendent entre un niveau supérieur vertical (52) et un niveau inférieur vertical (51), laquelle rampe de véhicule (20) comprend un dispositif de fixation au plancher (21) présentant une articulation supérieure (24) à laquelle est reliée une partie de rampe (28₁) et pouvant être monté sur un plancher (22) dans un véhicule de transport, une articulation inférieure (27, 97, 107) reliant le dispositif de fixation au plancher (21) à la partie de rampe (28₁) et l'articulation inférieure (27, 97, 107) pouvant pivoter autour de l'articulation supérieure (24), **caractérisée en ce que** l'articulation inférieure (27, 97, 107) est constituée sous la forme d'une entretoise élastique, qui, à une extrémité (27₁), est indirectement reliée au dispositif de fixation au plancher (21) au moyen d'une plaque d'appui (26), et, à l'autre extrémité (27₂), est reliée à la partie de rampe (28₁), et **en ce que** la plaque d'appui (26), qui est à son tour reliée à ladite articulation supérieure (24) du dispositif de fixation au plancher (21) et autour de laquelle la plaque d'appui (26) peut pivoter, dans laquelle la plaque d'appui (26) est pourvue d'un étrier de support rotatif (25) présentant une première vis de réglage (31), qui peut ajuster une position angulaire supérieure de la partie de rampe (28₁) par rapport à la plaque d'appui (26).

2. Rampe de véhicule selon la revendication 1, **caractérisée en ce qu'**une seconde vis de réglage (32) est reliée à la partie de rampe (28₁), laquelle seconde vis de réglage peut ajuster une position angulaire minimale de la partie de rampe (28₁) par rapport à la plaque d'appui (26).

3. Rampe de véhicule selon l'une quelconque des revendications 1 et 2, **caractérisée en ce qu'**un premier vérin d'amortissement (33), de préférence un vérin à gaz, est, à une de ses extrémités, relié au dispositif de fixation au plancher (21) et, à son autre extrémité, relié à la partie de rampe (28₁) pour amortir les mouvements de la partie de rampe lors de son fonctionnement.

4. Rampe de véhicule selon l'une quelconque des revendications 1 à 3, **caractérisée en ce qu'**une seconde partie de rampe (28₂) est reliée de manière permanente à la première partie de rampe (28₁) et laquelle seconde partie de rampe (28₂) est conçue pour étendre la rampe de véhicule en position activée, soit par repli des deux parties de rampe l'une par rapport à l'autre, soit par leur déplacement télescopique l'une par rapport à l'autre.

5. Rampe de véhicule selon la revendication 4, **caractérisée en ce qu'**un second vérin d'amortissement (34) est, à une de ses extrémités, relié à la première partie de rampe (28₁) et, à son autre extrémité, relié à la seconde partie de rampe (28₂) pour amortir les mouvements lors de ladite opération de repli.

6. Rampe de véhicule selon l'une quelconque des revendications 1 à 5, **caractérisée en ce que** l'extrémité de la partie de rampe (28₂) qui se raccorde au niveau inférieur vertical est pourvue d'un moyen à rouleau (41).

7. Rampe de véhicule selon l'une quelconque des revendications précédentes, dans laquelle l'entretoise est reliée au dispositif de fixation au plancher au moyen d'une patte de fixation qui entoure un épaississement à une extrémité de l'entretoise, et dans laquelle une patte de fixation correspondante est reliée à la partie de rampe pour entourer un épaississement à l'autre extrémité de l'entretoise.

8. Rampe de véhicule selon la revendication 7, dans laquelle la patte de fixation est intégrée à la plaque d'appui.

9. Rampe de véhicule selon la revendication 7 ou 8, dépendante de la revendication 5, dans laquelle l'articulation inférieure est réalisée en matière plastique et maintient ensemble la plaque d'appui et la première partie de rampe.
